## Europäisches Patentamt

## European Patent Office

## Office européen des brevets

(11) Veröffentlichungsnummer: **0 158 773**
**B1**

(12) **EUROPÄISCHE PATENTSCHRIFT**

(45) Veröffentlichungstag der Patentschrift:
02.09.87

(51) Int. Cl.⁴: **G 01 B 7/315,** G 01 B 5/255

(21) Anmeldenummer: **85101020.7**

(22) Anmeldetag: **31.01.85**

(54) **Radstellungs-Messvorrichtung.**

(30) Priorität: **08.02.84 EP 84101304**

(43) Veröffentlichungstag der Anmeldung:
**23.10.85 Patentblatt 85/43**

(45) Bekanntmachung des Hinweises auf die Patenterteilung:
**02.09.87 Patentblatt 87/36**

(84) Benannte Vertragsstaaten:
**AT DE FR GB IT**

(56) Entgegenhaltungen:
**WO-A-81/01047**
**CH-A-424 288**
**DE-A-2 358 313**
**FR-A-2 487 065**
**US-A-3 417 479**
**US-A-4 099 333**

(73) Patentinhaber: **Beissbarth, Osmond,**
**Sulzbacherstrasse 15, D-8000 München 40 (DE)**

(72) Erfinder: **Beissbarth, Osmond, Sulzbacherstrasse**
**15, D-8000 München 40 (DE)**

(74) Vertreter: **Patentanwälte Kirschner & Grosse,**
**Herzog- Wilhelm- Strasse 17, D-8000 München 2**
**(DE)**

## Beschreibung

Die Erfindung betrifft eine Radstellungs-Meßvorrichtung zur Ermittlung der Winkelstellung eines Räderpaares der lenkbaren Achse eines Kraftfahrzeuges, wobei die Radstellungs-Meßvorrichtung an den Rädern rechtwinklig zu deren Drehachse anbringbare Meßscheiben, eine Verbindungsbrücke, die den dem einen Rade zugeordneten Teil der Meßvorrichtung und den dem anderen Rad zugeordneten Teil der Meßvorrichtung verbindet, und wenigstens ein an der Verbindungsbrücke anbringbares Winkelmeßgerät aufweist, mit dem die Winkellagen der Meßscheiben bezüglich der senkrecht zur Fahrtrichtung des Kraftfahrzeuges ausgerichteten Verbindungsbrücke meßbar sind, und wobei an der Verbindungsbrücke in zu ihr senkrechten Ebenen Meßplatten angeordnet sind, von denen jede in horizontaler Richtung bis unter die zugeordnete Meßscheibe reicht, wenn sich die Verbindungsbrücke in Betriebsstellung an dem Kraftfahrzeug befindet.

Aus der CH-A- 424 288 ist eine derartige Meßvorrichtung bekannt, bei der zur Bestimmung der Achsneigung der Räder an einer Verbindungsbrücke zwei Meßköpfe mit mehreren Tastorganen vorgesehen sind. An den Rädern sind Meßflächen angeordnet, die in zwei Dimensionen einstellbar sind, um die Meßflächen rechtwinklig zu der Radlagerachse einstellen zu können. Nach der Ausrichtung der Verbindungsbrücke senkrecht zur Symmetrieachse des Kraftfahrzeuges und nach der Ausrichtung der Meßköpfe senkrecht zu der Radlagerachse werden die Meßköpfe, die mehrere Tastorgane aufweisen, an die Meßflächen zugestellt, wobei dann die Tastorgane die gewünschten Winkel erfassen. Bei dieser Meßvorrichtung hängt die Genauigkeit der Messung davon ab, daß die Meßflächen exakt senkrecht zu der Radlagerachse ausgerichtet werden. Dies ist in der Praxis nur dann gewährleistet, wenn das Fahrzeug angehoben wird und die Räder durchgedreht werden können. Beides, Abheben und Drehen der Räder ist aber bei Lastkraftwagen und Omnibussen mit großem Arbeits- und Kraftaufwand verbunden.

Demgegenüber liegt der Erfindung die Aufgabe zugrunde, eine einfache und robuste Meßvorrichtung anzugeben, mit der die Winkelstellung eines Räderpaares, insbesondere die Spur, genau gemessen werden kann.

Zur Lösung dieser Aufgabe ist bei der erfindungsgemäßen Radstellungs-Meßvorrichtung der eingangs genannten Art vorgesehen, daß das Winkelmeßgerät einen um die Längsachse seines Gehäuses schwenkbar gelagerten Kopf und einen Winkelgeber aufweist, der die Verschwenkung des Kopfes um die Längsachse mißt, und daß das Winkelmeßgerät zur Messung der Spur in etwa senkrecht, mit dem Gehäuse auf der Meßplatte und mit dem Kopf auf der der Meßplatte zugeordneten Meßscheibe aufsetzbar ist.

Nach der erfindungsgemäßen Meßvorrichtung wird also neben der Meßscheibe an dem Rad eine Meßplatte zugestellt, die auf der Verbindungsbrücke angeordnet ist, und die Winkelmeßgeräte messen die Winkel zwischen der Oberfläche der Meßscheibe und der Oberfläche der zugeordenten Meßplatte in vertikaler Richtung. Bei der erfindungsgemäßen Meßvorrichtung ist es nicht erforderlich, die Meßscheiben exakt parallel zu der Radaufnahmeplatte zu justieren, so daß auch keine Justierungsfehler gemacht werden können. Schließlich können die Winkel mit einfach aufgebauten und zu handhabenden sowie robusten Meßgeräten gemessen werden. Die Ausgestaltung der erfindungsgemäßen Meßvorrichtung nach Anspruch 2 gestattet zusätzlich die Messung des Sturzes, wobei nach der weiteren vorteilhaften Ausgestaltung gemäß Anspruch 3 sowohl Spur- als auch Sturzwerte gleichzeitig gemessen und einer Steuereinheit zur Verarbeitung zugeführt werden können.

Die Ausgestaltung der erfindungsgemäßen Meßvorrichtung nach Anspruch 4 ist insofern vorteilhaft, als ein Abstand zwischen der Oberfläche der Meßscheibe und der Oberfläche der Meßplatte ohne Beanspruchung der Teile des Winkelmeßgeräts und ohne Verlust an Genauigkeit der Messung aufgenommen werden kann.

Die Ausgestaltung der erfindungsgemäßen Meßvorrichtung nach Anspruch 5 hat den Vorteil, daß ein einfaches Drehpotentiometer als Winkelgeber verwendet wird, so daß die Verschwenkung des Ständerkopfes durch Aufsetzen des daran befestigten Ständers unmittelbar und ohne Zwischenschaltung weiterer mechanischer Mittel und damit genau gemessen wird.

Durch die vorteilhafte Ausgestaltung der erfindungsgemäßen Meßvorrichtung nach Anspruch 6 können die Winkelmeßgeräte in einfachster Weise an die Meßscheiben und Meßplatten aufgesetzt werden, und, bedingt durch den Durchmesser der Meßscheiben und die Breite der Meßplatten, wird der Plazierung der Winkelmesser eine weitgehende Freiheit gegeben, die sich bei Verwendung der Meßvorrichtung bei verschiedenen Fahrzeugtypen vorteilhaft auswirkt.

In bestimmten Fällen kann es ausreichend sein, nur ein Winkelmeßgerät zu verwenden, welches dann der Reihe nach in den verschiedenen Meßstellungen angesetzt wird. Bei Verwendung nur eines Winkelmeßgerätes ist es gemäß Anspruch 7 vorteilhaft, wenn das Winkelmeßgerät eine Meßschaltung mit Anzeigegerät enthält. Beim Ansetzen des Winkelmeßgerätes in der entsprechenden Meßstellung kann der Meßwert unmittelbar abgelesen werden. In diesem Zusammenhang ist es vorteilhaft, wenn das Winkelmeßgerät gemäß Anspruch 8 ausgestattet ist, da bei dieser Ausgestaltung die Winkel nicht nur der Größe nach, sondern auch nach ihrem Vorzeichen unmittelbar richtig abgelesen werden können.

Zum Ausrichten der Verbindungsbrücke zur Symmetrieachse des Kraftfahrzeuges werden nach Anspruch 9 vorteilhafterweise Projektoren eingesetzt.

Ausführungsbeispiele der Erfindung werden nun anhand der beiliegenden Zeichenung beschrieben. Es zeigen:

Fig. 1 schematisch die Front eines Kraftfahrzeuges, an dem die Meßvorrichtung angeordnet ist;

Fig. 2 eine schematische Seitenansicht, eines Vorderrades eines Kraftfahrzeuges mit der Meßvorrichtung;

Fig. 3 eine Draufsicht auf ein Winkelmeßgerät der Meßvorrichtung,;

Fig. 4 eine Seitenansicht des Winkelmeßgerätes von Fig. 3;

Fig. 5 eine Endansicht des Winkelmeßgerätes von Fig. 3;

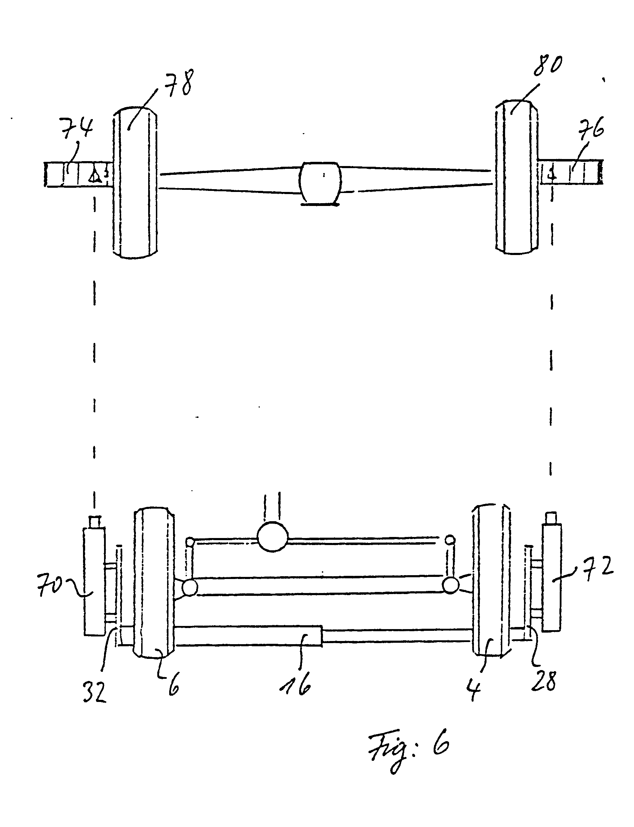

Fig. 6 eine schematische Draufsicht auf die beiden Achsen eines Kraftfahrzeuges mit den Vorrichtungen zum Einrichten der Verbindungsbrücke zur Symmetrieachse eines Kraftfahrzeuges;

Fig. 7 ein schematisches Schaltungsdiagramm einer Steuereinheit für die Meßvorrichtung von Fig. 1; und

Fig. 8 einen Schnitt durch eine Radaufnahmefläche und eine Meßscheibe der Meßvorrichtung.

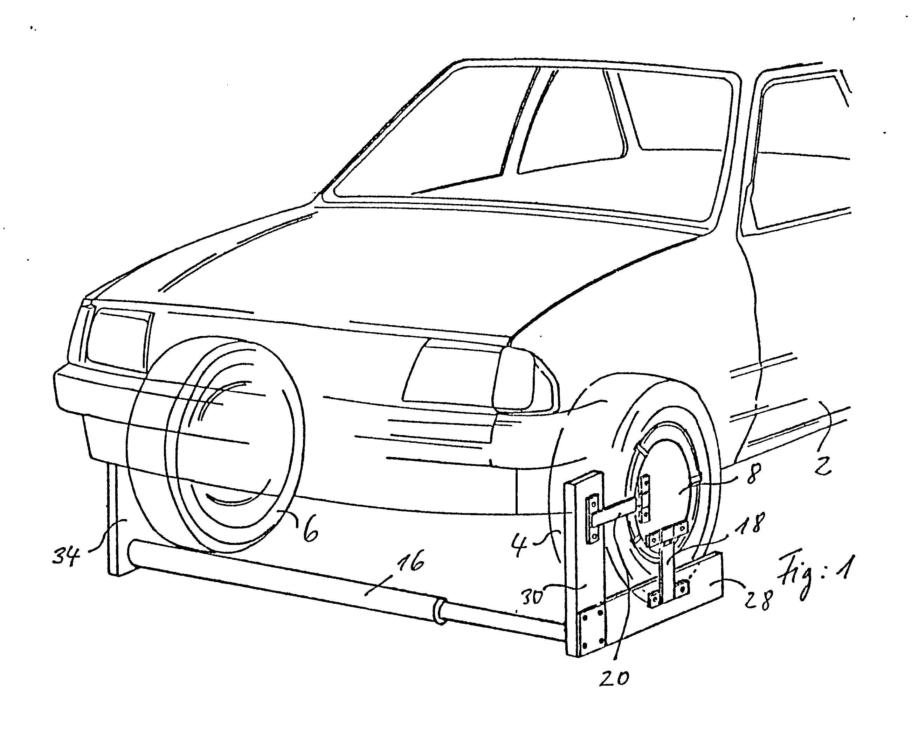

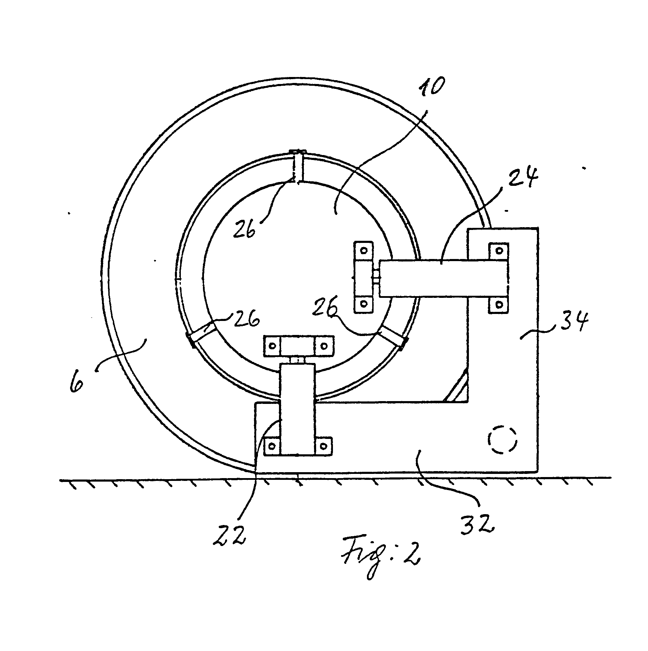

In Fig. 1 ist schematisch die Front eines Kraftfahrzeuges 2 mit den Vorderrädern 4, 6 dargestellt. An den Vorderrädern sind die hauptsächlichen Teile der Meßvorrichtung, nämlich eine Meßscheibe 8 an dem linken Vorderrad 4, eine Meßscheibe 10 (Fig. 2) an dem rechten Vorderrad 6, Meßplatten 28, 30; 32, 34 an dem linken bzw. rechten Vorderrad, eine Verbindungsbrücke 16, die die Meßplatten miteinander verbindet und sie parallel zueinander hält, und Winkelmeßgeräte 18, 20 an dem linken Vorderrad und Winkelmeßgeräte 22, 24 (Fig. 2) an dem rechten Vorderrad angeordnet. Die Meßvorrichtung wird durch eine Steuereinheit (nicht gezeigt) vervollständigt, in der die von den Winkelmeßgeräten abgegebenen Meßwerte verarbeitet und als Sturz- und Spurmeßwerte angezeigt werden können.

Die Meßscheiben 8, 10 sind durch dreiarmige Haltevorrichtungen 26 mit den Rädern 4, 6 fest verbunden. Die Haltevorrichtungen 26 müssen eine halbe Umdrehung der Räder 4, 6 ohne Veränderung ihrer Lage an den Rädern mitmachen können. Die Haltevorrichtungen 26 können mechanische Klammern oder zweckmäßigerweise zweiseitig wirkende Magnete sein, die zwischen dem Rad und der zugeordneten Meßscheibe eingesetzt werden. An den Haltevorrichtungen 26 sind keine Maßnahmen erforderlich, um einen eventuellen Felgenschlag auszugleichen. Die Außenflächen der Meßscheiben 8, 10 liegen daher, abgesehen vom Felgenschlag, rechtwinklig zur Drehachse der jeweiligen Räder. Die Meßscheiben 8, 10 haben bearbeitete, ebene Oberflächen und können, da sie nur einer geringen Beanspruchung ausgesetzt sind, dünn gehalten werden.

Für die Konstruktion der Verbindungsbrücke 16 gibt es verschiedene Möglichkeiten. Die Verbindungsbrücke 16 kann z. B. aus zwei teleskopartig bewegbaren Teilen bestehen, an deren Enden die Meßplatten 28, 30; 32, 34 senkrecht zu der Längsrichtung der Verbindungsbrücke 16 und parallel zueinander angeordnet sind. Aufgrund der Teleskopierbarkeit der Verbindungsbrücke 16 können die Meßplatten 28, 30; 32, 34 auf die Ebene der Meßscheiben 8, 10 an den Rädern herangeschoben werden. Die Verbindungsbrücke 16 liegt quer zur Fahrtrichtung des Fahrzeuges vor den zu vermessenden Rädern 4, 6. Die Meßplatten 28, 32 sind horizontal ausgerichtet, während die anderen Meßplatten 30, 34 vertikal ausgerichtet sind. Die horizontalen Meßplatten 28, 32 reichen von der Verbindungsbrücke 16 wenigstens bis unter die Mitte der zugeordneten Meßscheiben und die vertikalen Meßplatten 30, 34 reichen von der Verbindungsbrücke 16 Wenigstens bis zur Mitte der zugeordneten Meßscheiben. Somit können die Meßplatten mit ihrer ebenen Außenfläche im wesentlichen unter bzw. vor die Ebene der an den Rädern montierten Meßscheiben 8, 10 gebracht werden. Diese Lage der Meßplatten kann durch eine Klemmvorrichtung (nicht gezeigt) an der Verbindungsbrücke fixiert werden, indem z. B. die Teleskopteile der Verbindungsbrücke 16 aneinander arretiert werden. Die Verstellbarkeit der Verbindungsbrücke 16 ermöglicht es auch, Kraftfahrzeuge verschiedener Spurbreite zu vermessen. Um die Verbindungsbrücke mit den Meßplatten besser an das Kraftfahrzeug heranfahren zu können, kann die Verbindungsbrücke 16 mit kleinen Rädern (nicht gezeigt) ausgestattet sein. Die Verbindungsbrücke 16 kann aber auch aus einer Profilschiene bestehen, die über die Fahrzeugbreite hinausragt und auf die zwei Köpfe, die die horizontalen Meßplatten 28, 32 bzw. alle vier Meßplatten 25, 30, 32, 34 tragen, der Fahrzeugbreite entsprechend aufgesetzt und festgeklemmt werden.

Die Winkelmeßgeräte 18, 20, 22, 24 dienen zur Erfassung der Winkelstellung zwischen den Ebenen der Oberflächen der Meßplatten 28, 30; 32, 34 und den Ebenen der Oberflächen der Meßscheiben 8, 10. Die Winkelmeßgeräte 18, 22 (Figuren 1 und 2) sind vertikal angeordnet, verbinden die Meßscheiben 8, 10 mit den Meßplatten 28, 32 und dienen zur Ermittlung eines Spurwinkels, d.h. des Winkels einer Meßscheibe zu der zugehörigen Meßplatte in einer horizontalen Ebene. Die Winkelmeßgeräte 20, 24 sind horizontal angeordnet, verbinden die Meßscheiben 8, 10 mit den vertikalen Meßplatten 30, 34 und dienen zur Erfassung des Sturzes, d.h. den Winkel zwischen der Meßscheibe und der zugehörigen Meßplatte in einer vertikalen Ebene.

Das vorstehend beschriebene und in den Figuren gezeigte Ausführungsbeispiel der Meßvorrichtung gestattet somit sowohl die Messung des Sturzes als auch die Messung der Spur. Es ist jedoch zu beachten, daß bereits die vereinfachte Ausführungsform der Meßvorrichtung, bei der an der Verbindungsbrücke 16 lediglich die Meßplatten 28 und 32 angeordnet sind, eine funktionsfähige Vorrichtung zur Messung der Spur darstellt und als solche zur Messung der Radstellung verwendbar ist, wenn lediglich die Spurmessung erwünscht ist, wie es beispielsweise bei Lastkraftwagen und Omnibussen der Fall ist.

Eines der Winkelmeßgeräte 18, 20, 22, 24, nämlich das Winkelmeßgerät 18 ist in den Fig. 3 bis 5 gezeigt. Das Winkelmeßgerät 18 hat ein Gehäuse 40, an dem zwei Ständer, 42, 44 an den entgegengesetzten Enden angeordnet sind. Der Ständer 42 ist an einem Kopf 46 befestigt, der auf einer in der Längsmittelachse des Gehäuses 40 liegenden Welle 47 eines Drehpotentiometers 48 befestigt ist. Damit ist der Ständer 42 um die Längsachse des Gehäuses 40 schwenkbar gelagert. Das Drehpotentiometer 48 dient als Winkelgeber, der die Verschwenkung des Kopfes 46 und damit des Ständers 42 um die Längsachse des Gehäuses mißt. Die Ständer 42, 44 sind ferner um Achsen 50, 52, die senkrecht zur Längsachse des Gehäuses 40 liegen, schwenkbar gelagert. Damit können ein Abstand zwischen den Oberflächen der Meßscheiben und den Oberflächen der Meßplatten 28, 30, 32, 34 ausgeglichen und Spannungen an der Welle 47 des Drehpotentiometers 48 vermieden werden.

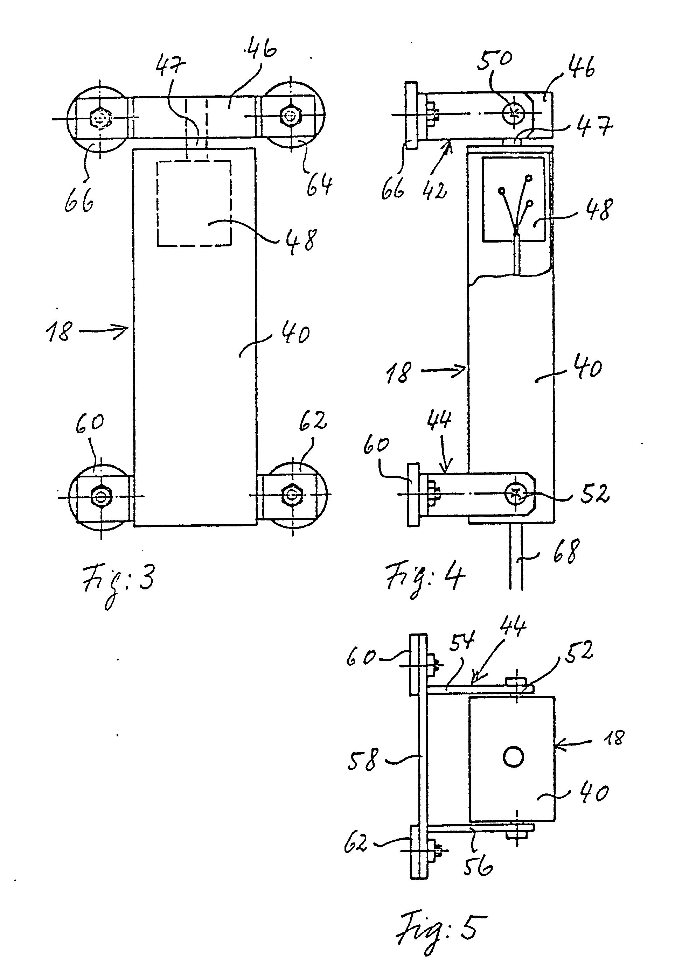

Wie aus Fig. 5 zu ersehen ist, hat der Ständer 44 seitliche Schenkel 54, 56, die von der in dem Gehäuse 40 gelagerten Drehachse 52 zu einer Bodenplatte 58 reichen, die eine größere Breite als das Gehäuse 40 hat, um eine breitere Meßbasis zu erhalten. Unterhalb der Bodenplatte 58 sind zwei Dauermagnete 60, 62 befestigt. Der Ständer 42 ist entsprechend wie der Ständer 44 aufgebaut und hat ebenfalls zwei Dauermagnete 64, 66. Mit Hilfe der Dauermagnete 60, 62, 64, 66 kann das Winkelmeßgerät 18 auf die Meßscheibe 8 einerseits und die Meßplatte 28 andererseits aufgesetzt und daran gehalten werden, wenn die Meßscheiben und Meßplatten aus Eisen oder dgl. bestehen. Dies erlaubt ein schnelles Aufsetzen und Abnehmen der Winkelmeßgeräte, eine gewisse Freiheit bei der Wahl des Platzes, an dem die Winkelmeßgeräte angesetzt werden, und eine einfache Bearbeitung der Oberflächen, der Meßscheiben und -platten. Anstelle der Befestigung mit Hilfe von Dauermagneten können jedoch auch andere Führungs- und Klemmvorrichtungen, wie Gleitschienen oder Prismen, verwendet werden, um die Winkelmeßgeräte an den Meßscheiben und Meßplatten zu befestigen.

Die Winkelmeßgeräte 18, 20, 22, 24 (Fig. 1 und 2) dienen zur Messung von Spur und Sturz aus der relativen Winkellage der Ebenen der Meßscheiben 8, 10 zu den Meßplatten.

Wenn die Verbindungsbrücke 16 senkrecht zur Längsmittelachse des Fahrzeugs steht, dienen die Winkelmeßgeräte 18, 22, senkrecht angesetzt, zur Messung der Spur, d.h. sie messen die Winkellage der Meßscheiben 8, 10 gegenüber den horizontalen Meßplatten 28, 32.

Waagrecht angesetzt dienen die Winkelgeber 20, 24 zur Erfassung des realen Sturzwertes, d.h. sie messen die Winkellage der Meßscheiben 8, 10 gegenüber den vertikalen Meßplatten 30, 34. Bei dieser Meßmethode des Sturzes ist, da die Räder und die Verbindungsbrücke 16 in nächster Nähe zueinander auf derselben Ebene stehen, die Anlage eines horizontalen Meßplatzes nicht Bedingung, d.h. die Messung ist ortsungebunden. Die einzelnen Spurwerte bei Mittelstellung der Lenkung werden von den Drehpotentiometern in den Winkelmeßgeräten präzis erfaßt, wenn die Verbindungsbrücke 16 zur Symmetrieachse des zu vermessenden Kraftfahrzeuges im rechten Winkel steht, da dann die Meßplatten 28, 32 parallel zur Symmetrieachse stehen.

Wenn die Meßscheiben und die Meßplatten in der horizontalen oder vertikalen Ebene keinen Winkel miteinander bilden, zeigen die Potentiometer in den entsprechenden Winkelmeßgeräten ein Ausgangssignal "0". Wenn die Meßscheiben und die Meßplatten in einem Winkel zueinander stehen, wird beim Aufsetzen der Winkelmeßgeräte die Welle des betreffenden Potentiometers entsprechend gedreht, so daß dessen Ausgangssignal den gemessenen Winkel anzeigt. Die von den Potentiometern abgegebenen Signale werden über Leitungen (z. B. 68 in Fig. 4) an eine zentrale Steuereinheit abgegeben und dort verarbeitet, wie noch beschrieben wird.

Eine Bedingung für die Messungen der Einzelspur ist, daß die Verbindungsbrücke 16 senkrecht zur Symmetrieachse des Kraftfahrzeugs steht. Um die Verbindungsbrücke in dieser Lage einzurichten, werden zwei abnehmbare Projektoren 70, 72 an den Meßplatten 28, 32 angesetzt. Die Lichtanzeiger der beiden Projektoren werden auf zwei Skalen 74, 76 gerichtet, die an den Hinterrädern 78, 80 des Kraftfahrzeugs angebracht sind. Aus den Skalenwerten auf den Skalen 74 und 76 ist der Stand der Verbindungsbrücke 16 in Bezug auf die Symmetrieachse des Fahrzeugs ersichtlich, und die Verbindungsbrücke 16 kann so lange ausgerichtet werden, bis auf beiden Skalen 74, 76 gleiche Werte angezeigt werden. Wenn die Verbindungsbrücke in diese Lage ausgerichtet ist, und die Lenkung sich in Mittelstellung befindet, können die Einzelspurwerte von den Anzeigerinstrumenten an der Steuereinheit abgelesen werden.

Mit der oben beschriebenen Meßvorrichtung können folgende Messungen durchgeführt werden: Einzelspur rechts, Einzelspur links, Gesamtspur der Vorderräder, Sturz rechts und Sturz links.

Im folgenden wird zunächst der Fall beschrieben, daß die Meßscheiben 8, 10 nicht exakt parallel zu den Radaufnahmeflächen liegen, auf denen die Räder montiert sind, d. h. es wird ein eventueller Felgenschlag in der Messung berücksichtigt. Der Felgenschlag ist deshalb in die Messung miteinzubeziehen, weil bei der bisher beschriebenen Ausführung die Meßscheiben 8, 10 über die Halter 26 an den Felgen montiert sind.

Zur Berücksichtigung des Felgenschlags werden nach Ausrichtung der Verbindungsbrücke 18 und nach der Montage der Meßscheiben 8, 10 die Winkelmeßgeräte 18, 20, 22, 24 in der in den Fig. 1 und 2 gezeigten Weise angesetzt. Die in den Winkelmeßgeräten gemessenen Werte werden gespeichert. Danach werden die Winkelmeßgeräte abgenommen, das Fahrzeug wird so bewegt, daß sich die Räder um 180 drehen, die Verbindungsbrücke 16 wird nachgeschoben und die Winkelmeßgeräte werden wieder aufgesetzt. Die Meßergebnisse der zweiten Messung werden mit den Ergebnissen der ersten Messung in an sich bekannter Weise verrechnet, um den Felgenschlag auszuschalten.

Eine Bewegung des Fahrzeugs zwischen den beiden Messungen kann durch Weiterdrehen der Räder um 180° auf einem Rollenstand ersetzt werden.

Die beiden zu prüfenden Räder stehen auf je zwei Rollen, die von zwei Elektromotoren langsam angetrieben werden. Eine solche Konstruktion würde die Meßzeiten verkürzen, ist aber ortsgebunden. Wenn andererseits ein Bremsenprüfstand vorhanden ist, bietet sich diese Lösung an. Bei einem Bremsenprüfstand sind die Rollen zur Bewegung der Räder vorhanden, die Umlaufgeschwindigkeit der Rollen ist gering, und die elektrische Anlage des Bremsenprüfstands kann mit geringem Aufwand so ausgelegt werden, daß die Bewegung des zu prüfenden Radpaares um 180° exakt durchgeführt werden kann.

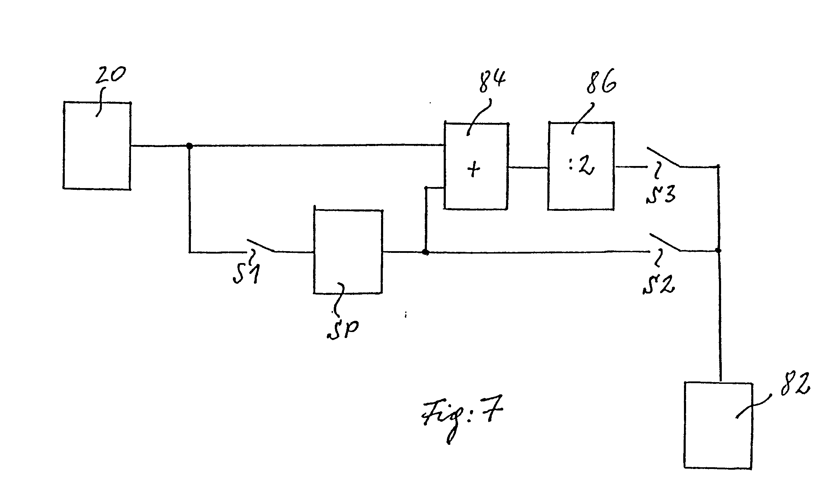

Eine elektrische Schaltung zur Durchführung der oben beschriebenen Messung ist schematisch und teilweise in Fig. 7 gezeigt. Das Ausgangssignal eines Winkelmeßgeräts 20, welches schematisch in Fig. 7 gezeigt ist, gelangt über einen Schalter S 1 zu einer Speicherschaltung SP und von dort über einen Schalter S 2 zur einem Anzeigegerät 82. Die Ausgangssignale des Winkelmeßgeräts 20 und des Speichers SP gelangen ferner zu einer Additionschaltung 84, von dort zu einer Divisionsschaltung 86 und über einen weiteren Schalter S 3 ebenfalls an das Anzeigegerät 82. Mit dieser Schaltung läßt sich die Messung wie folgt durchführen. Beim ersten Meßdurchgang werden die Schalter S 1 und S 2 geschlossen, so daß der Meßwert des Winkelmeßgeräts 20 an dem Anzeigegerät 82 angezeigt wird. Sodann werden die Schalter S 1 und S 2 geöffnet, so daß der Meßwert aus der ersten Messung in dem Speicher SP gespeichert ist. Beim zweiten Meßdurchgang wird der Schalter S 3 geschlossen, und die Meßwerte des Winkelmeßgeräts 20 und die aus dem Speicher SP werden in der Schaltung 84 addiert und in der Schaltung 86 durch zwei dividiert und in der Anzeigeeinrichtung 82 angezeigt. Bei dem nun angezeigten Mittelwert der beiden Messungen ist der Felgenschlag ausgemittelt. Die Schaltung von Fig. 7 ist selbstverständlich auch für die anderen Winkelmeßgeräte vorgesehen. Es können weitere Schaltungsstufen vorgesehen sein, um aus den ermittelten Meßwerten für die Einzelspur vorne links und die Einzelspur vorne rechts die Gesamtspur der Vorderräder zu ermitteln.

Vorteilhafterweise werden die Ausgangssignale aller vier Winkelgeber in einer Steuereinheit zusammengeführt, in der sie gemeinsam geschaltet und die Resultate wahlweise auf einem Digitalinstrument angezeigt werden.

Die Schaltungen, mit denen der Einfluß des Felgenschlags ausgemittelt wird, sind nur dann erforderlich, wenn die Meßscheiben 8, 10 auf der Felge montiert werden. Bei bestimmten Kraftfahrzeugen ist aber bereits eine spezielle Konstruktion vorgesehen, die es ermöglicht, die Meßscheiben 8, 10 exakt parallel zu der Radaufnahmeplatte zu montieren. Wenn die Meßscheiben 8, 10 in dieser Weise exakt parallel zu der Radaufnamefläche montiert sind, genügt bei der oben genannten Ausführungsform der erfindungsgemäßen Meßvorrichtung ein einziger Meßdurchgang, d.h. die Räder müssen nicht bewegt werden. Dadurch vereinfacht sich die Schaltung von Fig. 7, und es müssen lediglich die Einzelspurmeßwerte, vorzeichengerecht addiert werden, um die Gesamtspur der Vorderräder zu ermitteln.

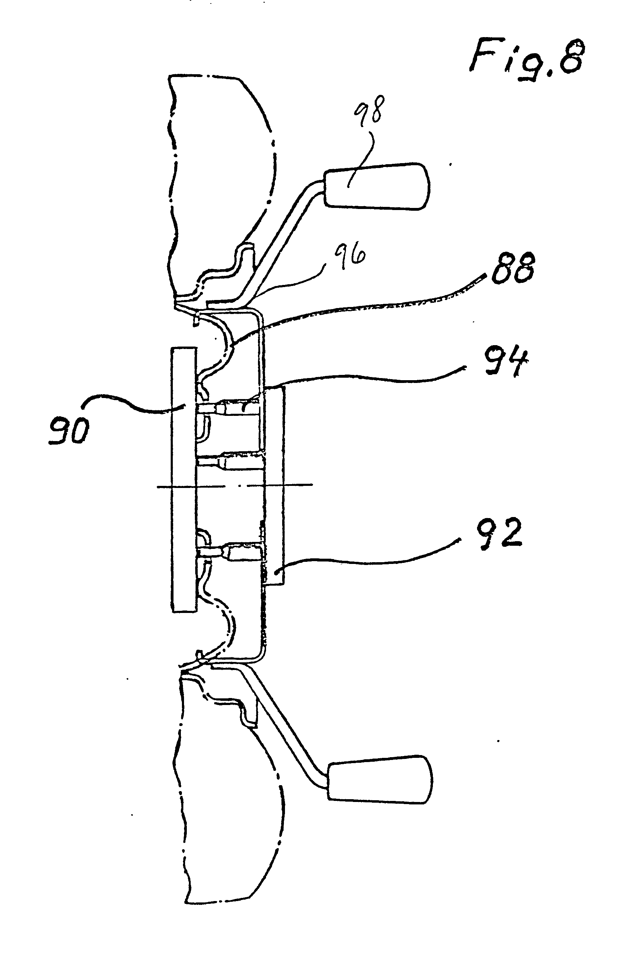

Im folgenden wird eine weitere Ausführungsform der Meßvorrichtung beschrieben, die sich für Messungen an solchen Kraftfahrzeugen eignet, bei denen die Meßscheiben 8, 10 schlagfrei im rechten Winkel zur Drehachse der Räder, d.h. parallel zu der Radaufnahmefläche montiert werden können, wobei auf Fig. 8 Bezug genommen wird. Bei dieser Konstruktion haben die Radfelgen 88 Bohrungen, die einen Zugang zu der Radaufnahmefläche 90 freigeben. Die Meßscheibe 92, die in ihrer Funktion der Meßscheibe 8 entspricht, hat auf der der Radaufnahmeplatte zugewandten Seite Bolzen 94, deren Länge in engen Toleranzen gleich ist und die im Teilkreis und in der Stückzahl der Bohrungen der Radfelge 88 entsprechen. Die Meßscheibe 92 mit dem Bolzen 94 wird dann mit an sich bekannten Spannvorrichtungen 96 mit Handgriffen 98 gegen die Radaufnahmeplatte 90 gedrückt, so daß die Bolzen 94 anliegen. Die Meßscheibe 92 steht dann exakt im rechten Winkel zu der Drehachse des Rades, so daß auf einen Ausgleich des Felgenschlages durch die Bewegung des Rades um 180° verzichtet werden kann. Auch die Speicherung der Meßwerte aus einem ersten Meßdurchgang für einen zweiten Meßdurchgang entfällt.

Da bei der vorstehenden Konstruktion nur vier Meßwerte bei einem Meßdurchgang aufgenommen werden müssen, kann die Meßvorrichtung insgesamt dahingehend vereinfacht werden, daß anstelle von vier Winkelmeßgeräten nur ein Winkelmeßgerät verwendet wird, das der Reihe nach senkrecht und horizontal am linken Vorderrad und senkrecht und horizontal am rechten Vorderrad angesetzt wird, um die Spur- und Sturzmessungen durchzuführen. Dazu kann ein Winkelmeßgerät der mechanischen Ausgestaltung dienen, wie sie oben beschrieben wurde. Die elektronische Ausstattung wird dann durch eine Batterie und ein Anzeigeinstrument an dem Winkelmeßgerät selbst ergänzt, so daß der Meßwert beim Ansetzen des Winkelmeßgeräts direkt abgelesen werden kann. Außerdem ist noch ein Umschalter erforderlich, der es gestattet, ein und dieselbe Winkelmessung je nach Fahrzeugseite einmal als positive Abweichung und einmal als negative Abweichung anzuzeigen. Beim Abfragen der vier Meßstellen mit ein und demselben Instrument führt nämlich eine positive Spur des linken Rades beim Winkelmeßgerät 20 zu einer Rechtsdrehung des Kopfes 46 gegenüber dem Gehäuse 40 und bei einer positiven Spur des rechten Rades zu einer Linksdrehung. Ein Positiver Sturz des linken Rades führt zu einer Linksdrehung des Kopfes 46 und ein positiver Sturz an dem rechten Rad zu einer Rechtsdrehung. Die Polung der elektrischen Schaltung durch den Umschalter ist also gleich bei den Messungen von: Spur rechts und Sturz links sowie bei Spur links und Sturz rechts. Die jeweils richtige Stellung des Umschalters kann durch eine entsprechende Beschriftung angezeigt werden.

Wie oben beschrieben wurde, werden die Winkelmeßgeräte entweder vertikal oder horizontal zwischen den Meßscheiben 8, 10 und den Meßplatten 12, 14 angesetzt. Um die vertikale und horizontale Ausrichtung der Winkelmeßgeräte zu erleichtern, können diese mit Libellen (nicht gezeigt) versehen sein.

## Patentansprüche

1. Radstellungs-Meßvorrichtung zur Ermittlung der Winkelstellung eines Räderpaares (4, 6) der lenkbaren Achse eines Kraftfahrzeuges (2), wobei die Radstellungs-Meßvorrichtung an den Rädern rechtwinklig zu deren Drehachse anbringbare Meßscheiben (8, 10) eine Verbindungsbrücke (16), die den dem einen Rad zugeordneten Teil der Meßvorrichtung und den dem anderen Rad zugeordneten Teil der Meßvorrichtung verbindet, und wenigstens ein an der Verbindungsbrücke (16) anbringbares Winkelmeßgerät (18, 20) aufweist, mit dem die Winkellagen der Meßscheiben bezüglich der senkrecht zur Fahrtrichtung des Kraftfahrzeuges ausgerichteten Verbindungsbrücke meßbar sind, und wobei an der Verbindungsbrücke in zu ihr senkrechten Ebenen Meßplatten (28, 32) angeordnet sind, von denen jede in horizontaler Richtung bis unter die zugeordnete Meßscheibe (8, 10) reicht, wenn sich die Verbindungsbrücke (16) in Betriebsstellung an dem Kraftfahrzeug (2) befindet,
dadurch gekennzeichnet, daß
das Winkelmeßgerät (18) einen um die Längsachse seines Gehäuses (40) schwenkbar gelagerten Kopf (46) und einen Winkelgeber (48) aufweist, der die Verschwenkung des Kopfes (46) um die Längsachse mißt, und daß das Winkelmeßgerät (18) zur Messung der Spur in etwa senkrecht, mit dem Gehäuse (40) auf der Meßplatte (28) und mit dem Kopf (46) auf der der Meßplatte (28) zugeordneten Mescheibe (8) aufsetzbar ist.

2. Meßvorrichtung nach Anspruch 1, dadurch gekennzeichnet, daß an der Verbindungsbrücke (16), in den zu ihr senkrechten Ebenen, zusätzliche Meßplatten (30, 34) angeordnet sind, die, wenn sich die Verbindungsbrücke (16) in Betriebsstellung an dem Kraftfahrzeug befindet, vertikal bis wenigstens zur Mitte der zugeordneten Meßscheiben (8, 10) ragen und seitlich zu diesen angeordnet sind, wobei das Winkelmeßgerät (18, 20) alternativ auf den zusätzlichen Meßplatten (30, 34) in etwa horizontal angeordnet und einerseits auf der Meßscheibe (8) und andererseits auf der zugeordneten Meßplatte (30, 34) zur Messung des Sturzes aufsetzbar ist.

3. Meßvorrichtung nach Anspruch 2, dadurch gekennzeichnet, daß an einer Meßscheibe (8, 10) und den zugeordneten Meßplatten (28, 30) zwei Winkelmeßgeräte (18, 20) angeordnet sind, wobei das eine Winkelmeßgerät (18) zur Messung der Spur mit seiner Längsachse vertikal und das andere Winkelmeßgerät (20) zur Messung des Sturzes mit seiner Längsachse horizontal angeordnet ist.

4. Meßvorrichtung nach einem der Ansprüche 1 bis 3, dadurch gekennzeichnet, daß an dem Gehäuse (40) und an dem Kopf (46) des Winkelmeßgerätes (18) Ständer (42, 44) vorgesehen sind, die um Achsen (50, 52) quer zur Längsachse des Gehäuses (40) verschwenkbar sind.

5. Meßvorrichtung nach Anspruch 4, dadurch gekennzeichnet, daß der Winkelgeber (48) ein Drehpotentiometer ist.

6. Meßvorrichtung nach Anspruch 4 oder 5, wobei die Meßscheibe und die Meßplatte aus ferromagnetischem Material bestehen, dadurch gekennzeichnet, daß die Ständer (42, 44) Dauermagnete (60, 62, 64, 66) zur Befestigung an den Meßscheiben und Meßplatten aufweisen.

7. Meßvorrichtung nach einem der Ansprüche 4 bis 6, dadurch gekennzeichnet, daß das Winkelmeßgerät eine elektrische Meßschaltung mit einem Winkel-Anzeigegerät enthält.

8. Meßvorrichtung nach Anspruch 7, dadurch gekennzeichnet, daß das Winkelmeßgerät einen Umschalter an der elektrischen Meßschaltung enthält, um die Meßwerte mit den entsprechenden Vorzeichen zur Anzeige zu bringen.

9. Meßvorrichtung nach einem der Ansprüche 1 bis 8, dadurch gekennzeichnet, daß die horizontalen Meßplatten (28, 32) Aufnahmen für Projektoren (70, 72) zur Ausrichtung der Verbindungsbrücke auf das Kraftfahrzeug aufweisen.

**Claims**

1. Wheel alignment measuring device for ascertaining the angularity of a pair of wheels (4, 6) of the steerable axis of a motor vehicle (2), said wheel alignment measuring device comprising gage disks (8, 10) adapted to be applied to said wheels at right angles to the axes of rotation thereof, a yoke (16) connecting the portion of the measuring device pertinent to one wheel with the portion of the measuring device pertinent to the other wheel, and at least one angle measuring device (18, 20) being adapted to be applied to said yoke (16) for measuring the angular positions of the gage disks in respect of the yoke which is aligned perpendicular to the driving direction of the motor vehicle, with measuring plates (28, 32) being arranged on said yoke at right angles thereto, each of said plates extending horizontally as far as points under said respective gage disks (8, 10) when said yoke (16) is located in an operational position on said motor vehicle (2), characterised in that the angle measuring device (18) comprises a head (46) pivotally mounted about the longitudinal axis of the housing (40) thereof, and an angle transducer (48) for measuring the rocking motion of the head (46) about the longitudinal axis thereof, and that the angle measuring device (18) for measuring the toe-in angle is adapted to be mounted approximately vertical, with the housing (40) on the measuring plate (28) and with the head (46) on the gage disk (8) of the respective measuring plate (28).

2. Measuring device according to claim 1, characterised in that further measuring plates (30, 34) are mounted on the yoke (16) at right angles thereto, which further measuring plates, when the yoke (16) is in an operational position as applied to said motor vehicle, extend vertically at least as far as the middle of the respective measuring plates (8, 10) and are arranged laterally thereof, the angle measuring device (18, 20) being alternatively disposed on said further measuring plates (30, 34) essentially horizontal and being adapted to be mounted on the one side on the gage disk (8) and on the other side on the respective measuring plate (30, 34) for measuring camber.

3. Measuring device according to claim 2, characterised in that two angle measuring devices (18, 20) are arranged on one gage disk (8, 10) and the respective measuring plates (28, 30), one angle measuring device (18) being mounted with its longitudinal axis vertical for measuring the toe-in angle, and the other angle measuring device (20) being mounted with its longitudinal axis horizontal for measuring camber.

4. Measuring device according to any of claims 1 to 3, characterised in that on the housing (40) and on the head (46) of the angle measuring device (18) there are provided stands (42, 44) adapted to pivot about axes (50, 52) transversal to the longitudinal axis of the housing (40).

5. Measuring device according to claim 4, characterised in that the angle transducer (48) is a rotary potentiometer.

6. Measuring device according to claim 4 or 5, the gage disk and the measuring plate consisting of ferromagnetic material, characterised in that the stands (42, 44) comprise permanent magnets (60, 62, 64, 66) for adhering to the gage disks and measuring plates.

7. Measuring device according to any of claims 4 to 6, characterised in that the angle measuring device comprises an electrical measuring circuit with an angle display device.

8. Measuring device according to claim 7, characterised in that the angle measuring device comprises a two-way switch on the electrical measuring circuit for indication with corresponding plus and minus designations of measurement results.

9. Measuring device according to any of claims 1 to 8, characterised in that the horizontal measuring plates (28, 32) comprise mounts for projectors (70, 72) to align the yoke in relation of the motor vehicle.

**Revendications**

1. Appareil de mesure de l'alignement de roues pour établir la position angulaire d'une paire de roues (4, 6) de l'essieu dirigeable d'une automobile (2), l'appareil de mesure comportant des disques de mesure (8, 10) que l'on place aux roues à angles droits à leur axe de rotation, un raccord (16) reliant la partie de l'appareil de mesure relative à la première roue et la partie de l'appareil de mesure relative à l'autre roue, et au moins un appareil de mesure d'angle (18, 20) qu'on peut fixer au raccord (16) et à l'aide duquel on peut mesurer les positions angulaires des disques de mesure par rapport au raccord aligné perpendiculairement au sens de marche de l'automobile, des plaques de mesure (28, 32) étant disposées au raccord perpendiculairement à celui-ci, chacune des plaques s'étendant horizontalement jusque sous le disque de mesure (8, 10) correspondant lorsque le raccord (16) se trouve à l'automobile (2) en position de travail, caractérisé en ce que l'appareil de mesure d'angle (18) présente une tête (46) pivotante autour de l'axe longitudinal de son boîtier (40) et un capteur angulaire (48) mesurant le balayage horizontal de la tête (46) autour de l'axe longitudinal, et que l'appareil de mesure d'angle (18), pour mesurer le pincement, peut être monté essentiellement verticalement, avec son boîtier (40) sur la plaque de mesure (28) et avec sa tête (46) sur le disque de mesure (8) appartenant à la plaque de mesure (28).

2. Appareil de mesure slon la revendication 1, caractérisé en ce que des plaques de mesure supplémentaires (30, 34) sont montées au raccord (16) perpendiculairement à celui-ci, qui s'étenent verticalement jusqu'au moins au milieu des disques de mesure correspondants (8, 10) et sont disposées lateralement à ceux-ci lorsque le raccord (16) se trouve à l'automobile en position de travail, et que l'appareil de mesure d'angle (18, 20), alternativement, est disposé sur les plaques de mesure supplémentaires (30, 34) essentiellement horizontalement et peut être monté, d'une part, sur le disque de mesure (8) et d'autre part sur la plaque de mesure (30, 34) correspondante pour mesurer le carrossage.

3. Appareil de mesure selon la revendication 2, caractérisé en ce qu'il y a disposés, à un disque de mesure (8, 10) et aux plaques de mesure correspondantes (28, 30), deux appareils de mesure d'angle (18, 20), l'un des appareils de mesure d'angle (18) étant disposée, avec son axe longitudinal, verticalement pour mesurer le pincement, et l'autre appareil de mesure d'angle (20) etant disposé, avec son axe longitudinal, horizontalement pour mesurer le carrossage.

4. Appareil de mesure selon l'une quelconque des revendications 1 à 3, caractérisé en ce qu'il y a des supports (42, 44) arrangés au boîtier (40) et à la tête (46) de l'appareil de mesure d'angle (18), lesdits supports étant pivotants autour des axes (50, 52) transversalement à l'axe longitudinal du boîtier (40).

5. Appareil de mesure selon la revendication 4, caractérisé en ce que le capteur angulaire (48) est un potentiomètre rotatif.

6. Appareil de mesure selon la revendication 4 ou 5, le disque de mesure et la plaque de mesure consistant en matière ferromagnétique, caractérisé en ce que les supports (42, 44) comprennent des aimants permanents (60, 62, 64, 66) pour adhérer aux disques de mesure et aux plaques de mesure.

7. Appareil de mesure selon l'une quelconque des revendications 4 à 6, caractérisé en ce que l'appareil de mesure d'angle contient un montage électrique de mesure avec un indicateur d'angle.

8. Appareil de mesure selon la revendication 7, caractérisé en ce que l'appareil de mesure d'angle contient un commutateur disposé au montage électrique de mesure, ledit commutateur étant destiné à indiquer les valeurs mesurées avec leurs signes correspondants.

9. Appareil de mesure selon l'une quelconque des revendications 1 à 8, caractérisé en ce que les plaques de mesure horizontales (28, 32) présentent des logements pour des projecteurs (70, 72) destinés à aligner le raccord vers l'automobile.

Fig. 1

Fig: 2

Fig: 3

Fig: 4

Fig: 5

74 78 80 76

70 72

32 6 16 4 28

Fig: 6

Fig. 7

Fig.8